Europäisches Patentamt

European Patent Office

Office européen des brevets

(11) Publication number : **0 466 357 A1**

# EUROPEAN PATENT APPLICATION

(21) Application number : **91305776.6**

(22) Date of filing : **26.06.91**

(51) Int. Cl.⁵ : **C09D 195/00,** B32B 11/04, B05D 1/36

(30) Priority : **28.06.90 US 545433**

(43) Date of publication of application :
**15.01.92 Bulletin 92/03**

(84) Designated Contracting States :
**AT BE CH DE DK ES FR GB GR IT LI LU NL SE**

(71) Applicant : **ROHM AND HAAS COMPANY**
**Independence Mall West**
**Philadelphia Pennsylvania 19105 (US)**

(72) Inventor : **Marks, Allen Philip**
**75 Redwood Drive**
**Richboro, Pennsylvania 18954 (US)**
Inventor : **Frantz, Ronald Lee**
**622 Elm Terrace**
**Riverton, New Jersey 08077 (US)**

(74) Representative : **Smith, Julian Philip Howard et al**
**Rohm and Haas (UK) Limited, European Operations Patent Dept., Lennig House, 2 Masons Avenue**
**Croydon CR9 3NB (GB)**

(54) **An aqueous tiecoat composition.**

(57)    A method for improving the quality of a mastic coating system by using a tiecoat which consists of an aqueous latex-modified asphalt emulsion. The tiecoat is applied to a substrate and then at least one subsequent coating is applied to the tiecoat to yield a mastic coating system having superior resistance to tack and bleed-through discolouration.

EP 0 466 357 A1

EP 0 466 357 A1

The present invention is concerned with an aqueous tiecoat composition. The present invention is also concerned with a mastic coating system comprising same, a method for making same and a method for improving the quality of a mastic coating system by using the tiecoat disposed between a substrate and at least one subsequent coating. More particularly, the present invention is concerned with a tiecoat consisting of an aqueous latex-modified asphalt emulsion which provides improved properties to a mastic coating system when the tiecoat is disposed between the substrate and the mastic topcoat.

Generally, a "mastic topcoat" is a relatively thick coating system, conventionally of a dried thickness of about 20 to about 40 mils (0.05 to 0.10 cm), applied to interior or exterior substrates, such as for example, concrete block walls or built-up roofing formed from roofing felts and asphalt or tar.

The term "substrate" as used herein may be a newly formed or aged surface, such as for example concrete, or it may comprise a first substrate surface freshly or previously treated or coated with at least one coating, such as for example a re-tarred flat roof.

The term "latex" as used herein refers to a water-insoluble polymer which may be prepared by conventional polymerization techniques, such as for example by emulsion polymerization.

The term "glass transition temperature," or "Tg," as used herein means the glass transition temperature of a polymer as calculated by the Fox equation:

$$1/T_{g(A\text{-}B\ copolumer)} = \text{weight } \% \ A/T_{g(A)} + \text{weight } \% \ B/T_{g(B)}$$

(wherein: $T_{g(A\text{-}B\ copolymer)}$ is the glass transition temperature of the copolymer containing monomers A and B; and $T_{g(A)}$ and $T_{g(B)}$ are the glass transition temperatures of homopolymers containing monomers A and B, respectively. Weight % A and Weight % B are the amount of monomers A and B in the final copolymer. The A-B copolymer may also represent a homopolymer. All temperatures are on the Kelvin scale.)

A large percentage of the roofing market utilizes asphalt-based products, such as for example modified bituminous rolls, as base substrates which are then topcoated with conventional roof mastics to improve durability (asphalt degradation), provide energy savings (white coating vs. black asphalt), reduce the fire rating, and improve aesthetics. Such coatings are frequently referred to as "roof mastics", although "mastic topcoat" as used herein includes any such thick coatings applied to a substantially horizontal surface, such as for example a roof deck, or to a substantially vertical surface, such as for example a wall, or to other substrate surfaces. Unfortunately, these mastic topcoats have deficiencies. A roof deck, or other surface, by design or because of imperfections, may retain water. This ponded water results in blistering and loss of adhesion leading to failure of the mastic topcoat.

Typically, a tiecoat is applied to a substrate, such as for example a bituminous surface, that is prone to releasing coloured bodies which would otherwise migrate into and discolour a mastic topcoat if it were directly applied to the substrate or if it were applied to an non-latex modified asphalt emulsion tiecoat. The application of the tiecoat is an additional step in the application of the overall mastic coating system. It is essential that the tiecoat rapidly becomes low in tack so that the subsequent mastic topcoat can promptly be applied by operators walking on the tiecoat such that the overall application process is not unduly prolonged.

Also, an asphalt emulsion tiecoat may be employed to improve the resistance to blistering and loss of adhesion of the mastic coating system

In the prior art, US-A-3,266,925 discloses an oil-stain-resistant roofing and siding sheet configuration in which lightweight oil fractions migrating from asphalt and bituminous substrates are prevented from staining decorative coloured embedded granules by coating the granules with an anionic oleophobic fluorocarbon sizing agent. The incorporation into the substrate layer of a cationic polyamine salt, which is adapted to react with the anionic fluorocarbon coating, improves the adhesion between the fluorocarbon coated granules and the substrate layer.

US-A-3,620,810 discloses a three layered waterproof roof coating consisting of a first layer comprising gypsum, perlite, clay and other inorganic components, a second layer comprising a waterproof coating containing the components of the first layer with emulsified asphalt added thereto, and a top coating consisting of a polyvinylacetate emulsion and titanium dioxide.

US-A-4,291,086 discloses a coating of high tensile strength and resilience for roofs and swimming pools comprising an asphalt underlayer, an intermediate layer of woven glass fabric, a first overlayer of acrylic emulsion bonded to the underlayer and intermediate layer and a second overlayer of acrylic resin emulsion bonded to the first overlayer. The coating is disclosed to minimize splitting, localized cracking, wrinkling and blistering and may provide stable cover of existing cracks and wrinkles, such as for example on old roofs.

US-A-4,654,385 discloses an aqueous coating composition in the form of an emulsion of chemically-modified asphalt and a normal, non-modified asphalt in an aqueous emulsification medium. A process of making the aqueous coating composition is also disclosed. The composition is particularly adapted for use as a primer for adhering an asphalt-based membrane to an asphalt and as a damp-proofing coating for basement walls and the like.

2

DE-A-3710405 discloses a composition, which comprises a mixture of bitumen and elastomer, for use as a seamless, monolithically-applied roofing and sealing layer.

Japanese Kokai patent SHO 54-7298 discloses an undercoating composition for a wall construction which comprises an asphalt emulsion, 50-400 weight % inorganic grains (based on weight % solids of the asphalt emulsion) and 1-150 weight % acrylic synthetic resin emulsion (based on weight % solids of the asphalt emulsion). The undercoating composition is said to simplify the finishing work on wall surfaces and provide waterproofing without forming cracks or separating finished upper layer.

Japanese Kokai patent SHO 57-145164 discloses an undercoat composition for wall construction which comprises an asphalt emulsion, synthetic resin emulsion and alkali-resistant glass fibers. The undercoating composition is said to simplify the finishing work on wall surfaces and provide waterproofing without forming cracks or separating finished upper layer.

Japanese Kokai Patent SHO 57-145165 discloses a preparation of an undercoating which involves adjusting the pH of a synthetic resin emulsion with a volatile alkaline compound and then mixing the emulsion with an asphalt emulsion.

Japanese Kokai patent SHO 57-28156 discloses a method for improving the corrosion, water resistance and heat resistance, bonding force of emulsion-type lining materials by blending a filler, such as crystalline water glass powder, into an emulsion, such as urethane, epoxyl, latex, bitumen-latex, polyvinyl acetate, acrylic resin and the like.

Japanese patent JP 84-019591-B discloses a mortar finish method which is characterized by firstly applying to plywood an adhesive composition composed of, per 100 parts by weight of a cationic rubber-asphalt emulsion, 20 to 300 parts by weight of a cationic thermoplastic resin emulsion and then, after this has dried, applying a coating of mortar to form a mortar coating.

Japanese patent JP 88-2918 discloses a method for preventing corrosion of concrete caused by water penetration, acid deterioration and salt deterioration comprising applying a two-layered, waterproof, compatible laminate to concrete. The laminate comprises a primer based on an elastic rubber or a rubber-asphalt emulsion which is covered by an unsaturated polyester resin or epoxy resin containing flake-shaped filler.

There are however problems associated with the use of the prior art asphalt emulsion tiecoats. For example, the asphalt emulsion tiecoats have a deleterious effect on the resistance to bleed-through discolouration of the mastic coating system. In some cases, highly coloured bodies in or on the substrate or, more particularly, in the newly applied tiecoat migrate into and discolour the mastic topcoat.

The present invention seeks to overcome the problems associated with the prior art asphalt emulsion tiecoats.

According to a first aspect of the present invention there is provided an aqueous tiecoat composition comprising an asphalt emulsion admixed with at least one latex polymer having a glass transition temperature of less than about 10°C, wherein the composition contains from about 5% to 85% latex solids based on the % total solids of the admixture and from about 15% to 95% asphalt emulsion solids based on the % total solids of the admixture.

According to a second aspect of the present invention there is provided a mastic coating system comprising an aqueous tiecoat composition as just defined intermediate of a substrate surface and a mastic topcoat.

According to a third aspect of the present invention there is provided a method of forming an aqueous tiecoat composition comprising admixing an asphalt emulsion with at least one latex polymer having a glass transition temperature of less than about 10°C and in amounts such that the composition contains from about 5% to 85% latex solids based on the % total solids of the admixture and from about 15% to 95% asphalt emulsion solids based on the % total solids of the admixture.

According to a fourth aspect of the present invention there is provided a method of forming a mastic coating system comprising applying a tiecoat composition to a substrate surface and applying a mastic topcoat onto the tiecoat composition, characterised in that the tiecoat composition comprises an asphalt emulsion admixed with at least one latex polymer having a glass transition temperature of less than about 10°C and wherein the composition contains from about 5% to 85% latex solids based on the % total solids of the admixture and from about 15% to 95% asphalt emulsion solids based on the % total solids of the admixture.

According to a fifth aspect of the present invention there is provided a method of improving the quality of a mastic coating system comprising forming an aqueous tiecoat composition; applying the tiecoat composition to a substrate surface; and applying a mastic topcoat onto the tiecoat composition; characterised in that the tiecoat composition comprises an asphalt emulsion admixed with at least one latex polymer having a glass transition temperature of less than about 10°C and wherein the composition contains from about 5% to 85% latex solids based on the % total solids of the admixture and from about 15% to 95% asphalt emulsion solids based on the % total solids of the admixture.

When the aqueous tiecoat of the present invention, which consists of a latex-modified asphalt emulsion, is disposed between a substrate and a mastic topcoat, the mastic coating system thus formed has an improved resistance to tack and bleed-through discolouration and, also the tiecoat does not unduly complicate or hinder the application of the mastic coating system.

None of the afore-mentioned prior art references teaches the use of a tiecoat composed of a latex admixed with an asphalt emulsion disposed between a substrate and a mastic topcoat to solve the problems associated with achieving an effective mastic coating system.

Preferably, the tiecoat contains from about 15% latex solids and 85% asphalt emulsion solids to about 85% latex solids and 15% asphalt emulsion solids, based on total % solids.

Preferably, the tiecoat contains from about 15% latex solids and 85% asphalt emulsion solids to about 50% latex solids and 50% asphalt emulsion solids, based on total % solids.

Preferably, the substrate surface is an asphaltic, bituminous, cement, asbestos, urethane foam or concrete substrate. More preferably, the substrate surface is an asphaltic or bituminous substrate.

The present invention therefore provides a method for improving the quality of a mastic coating system by using a tiecoat composition disposed between a substrate and mastic topcoat. This results in the mastic coating system having an improved resistance to tack and bleed-through discolouration.

In the present invention, the aqueous tiecoat is applied to the substrate prior to the application of at least one mastic topcoat. The aqueous tiecoat used in the present invention comprises at least one latex admixed with an asphalt emulsion.

The asphalt emulsions useful as components in the tiecoat of this invention are dispersions of asphalt in water. These asphalt emulsions may also contain emulsifiers and stabilizers, such as for example soap or surfactant, which may be anionic, cationic or nonionic. A useful asphalt emulsion is for example SS-1h grade asphalt (SS-1h, which is an anionically-stabilized asphalt emulsion, is a trade mark of Sahuaro).

Typically, the asphalt emulsions contain from about 35% solids to about 75% solids, more preferably from about 55% solids to about 65% solids and most preferably about 60% solids. Generally, asphalt emulsions with less than about 35% solids have been found to be detrimental to tack, to lower the viscosity below a usable level and to prolong unduly the application of the tiecoat. Generally, asphalt emulsions with greater than about 75% solids have been found to be detrimental to stability and to increase the viscosity above a usable level. Typically, the asphalt emulsions have a hardness from about 20 pen hardness to about 100 pen hardness and more preferably from about 20 pen hardness to about 40 pen hardness. Generally, pen hardness values greater than about 100 are too soft for many roofing applications and contribute significantly to surface tack.

The latices or latex polymers used in the tiecoat of this invention may be formed from any monomer or mixture of monomers which yields a water-insoluble latex polymer with a glass transition temperature of less than about 10°C in the dried state. For example, acrylic ester monomers, including methyl acrylate, ethyl acrylate, butyl acrylate, 2-ethylhexyl acrylate, decyl acrylate, methyl methacrylate, ethyl methacrylate, isodecyl methacrylate, butyl methacrylate, acrylic acid, methacrylic acid, itaconic acid, maleic acid, fumaric acid, styrene, substituted styrenes, butadiene, acrylonitrile, ethylene, vinyl acetate and the like may be used. It is required that the glass transition temperature of the resultant latex be less than about 10°C so that the tiecoat composition, formed by admixture with the asphalt emulsion, is flexible enough to withstand the requirements of the mastic coating system which may experience exterior temperature extremes and concommitant substrate expansion and contraction. Some of the monomers may only be used with other monomers in a mixture because they alone would not give rise to a homopolymer whose glass transition temperature is less than about 10°C, such as for example methyl methacrylate, which is a monomer whose homopolymer has a $T_g$ of 105°C.

In addition, conventional coating components such as, for example, pigments, dispersants, surfactants, coalescents, wetting agents, rheology modifiers, thickeners, drying retarders, biocides, antifoaming agents, colourants, waxes, and the like may be used in the latex of the tiecoat of this invention.

The latex polymer is incorporated into the asphalt emulsion at a level of from about 5% latex solids/95% asphalt emulsion solids to about 85% latex solids/15% asphalt emulsion solids, based on the % total solids of the admixture, more preferably from about 15% latex solids/85% asphalt emulsion solids to about 85% latex solids/15% asphalt emulsion solids and most preferably from about 15% latex solids/85% asphalt emulsion solids to about 50% latex solids/50% asphalt emulsion solids.

The overall level of solids in the tiecoat is from about 10% by weight to about 75% by weight of the weight of the tiecoat. Generally, it has been found that a level of total weight % solids of less than about 10% is detrimental to tack, and lowers the viscosity of the tiecoat below a usable level and unduly prolongs the application of the tiecoat. Generally, levels of total weight % solids greater than about 75% are detrimental to the stability of the tiecoat and increase the viscosity of the tiecoat above a usable level. The level of solids in the tiecoat is more preferably from about 40% by weight to about 60% by weight, based on the total weight %.

The tiecoat may be applied to various substrates such as for example asphalt-containing substrates, bitumen-containing substrates or modified bitumen, cement/asbestos shingles or roofing panels, urethane foam roofing panels, deteriorated concrete, and the like. The tiecoat may be applied by conventional techniques, such as for example by brush, roller, airless spray and the like.

The present invention will now be described by way of examples only.

Example 1. Preparation of Mastic Topcoat 1

The following ingredients were combined and ground for 15 minutes on a high speed Cowles disperser:

| | |
|---|---|
| Water | 161.60 g |
| Hydroxyethyl cellulose (NATRSOL® 250 MXR) | 4.42 g |
| Anionic dispersant (30% total solids)(TAMOL® 901) | 5.02 g |
| Ethylene glycol | 25.70 g |
| Defoamer (NOPCO® NXZ) | 2.01 g |
| Potassium tripolyphosphate | 1.51 g |
| Calcium carbonate (DURAMITE®) | 385.79 g |
| Titanium dioxide (TiPURE® R-960) | 74.09 g |

The grind was let down at low speed with the following ingredients:

| | |
|---|---|
| Latex polymer (55% total solids) 65.35 BA/33.82 MMA/0.83 MAA | 496.00 g |
| Coalescent (TEXANOL®) | 7.32 g |
| Mildewcide (SUPER-AD-IT®) | 1.00 g |
| Defoamer (NOPCO® NXZ) | 2.01 g |

(BA=butyl acrylate; MMA=methyl methacrylate; MAA=methacrylic acid. NATROSOL, which is hydroxyethylcellulose, is a trade mark of Hercules; TAMOL, which is an ammonium salt of carboxylated polyelectrolyte, is a trade mark of Rohm and Haas Company; NOPCO, which is a defoamer, is a trade mark of Diamond Shamrock; DURAMITE, which is calcium carbonate, is a trade mark of Thompson, Weinman & Co.; TiPURE, which is titanium dioxide, is a trade mark of DuPont; TEXANOL, which is 2,2,4-trimethyl-3-hydroxypentyl acetate, is a trade mark of Eastman Chemical; SUPER-AD-IT, which is a biocide, is a trade mark of Nuodex.)

Example 2. Preparation of Mastic Topcoat 2

The following ingredients were combined and ground for 15 minutes on a high speed Cowles disperser:

| Water | 140.74 g |
|---|---|
| Hydroxyethyl cellulose (NATROSOL® 250 MXR) | 16.00 g |
| Anionic dispersant (30% total solids)(TAMOL® 850) | 4.76 g |
| Ethylene glycol | 24.38 g |
| Defoamer (NOPCO® NXZ) | 1.90 g |
| Potassium tripolyphosphate | 1.43 g |
| Calcium carbonate (DURAMITE®) | 422.72 g |
| Titanium dioxide (TiPURE® R-960) | 70.37 g |
| Zinc oxide (KADOX® 515) | 46.95 g |

The grind was let down at low speed with the following ingredients:

| Latex polymer (55% total solids) | 470.59 g |
|---|---|
| 85.00 BA/12.35 MMA/1.65 MAA/1.0 UMA | |
| Coalescent (TEXANOL®) | 6.95 g |
| Defoamer (NOPCO® NXZ) | 1.90 g |
| Mildewcide (SKANE® M-8) | 2.10 g |
| Ammonium hydroxyide (28% ammonia) | 0.95 g |

(BA=butyl acrylate; MMA=methyl methacrylate; MAA=methacrylic acid; UMA=ureido-functional methacrylate as disclosed in US-A- 4,777,265 which is herein by reference. NATROSOL, which is hydroxycellulose, is a trade mark of Hercules; TAMOL, which is an ammonium salt of carboxylated polyelectrolyte, is a trade mark of Rohm and Haas Company; NOPCO, which is a defoamer, is a trade mark of Diamond Shamrock; DURAMITE, which is calcium carbonate, is a trade mark of Thompson, Weinman & Co; TiPURE, which is titanium dioxide, is a trade mark of DuPont; KADOX, which is zinc oxide, is a trade mark of New Jersey Zinc; TEXANOL, which is 2,2,4-trimethyl-3-hydroxypentyl acetate, which is a trade mark of Eastman Chemical; SKANE, which is 2-n-octyl-4-isothiazoline-3-one, is a trade mark of Rohm and Haas Company.)

Example 3. Preparation of Tiecoats

To prepare the tiecoats of the present invention, a weighed amount of each of the following samples of commercially-available latices (Table 3.1) was added to SS-1h type asphalt emulsion (SS-1h is a trade mark of Sahuaro and is an asphalt emulsion of 60.0% solids and 23-27 pen hardness) to give tiecoats with 15%, 50%, 85% and 100% latex solids, based on % total solids in the tiecoat (Table 3.2). The latex-modified asphalt emulsion was stirred for 5 minutes at ambient temperature with a laboratory mixer.

## Table 3.1  Latex Polymers

| Latex Polymer | Composition | %Total Solids | pH | Tg (°C) |
|---|---|---|---|---|
| 1 | EVA | 55.0 | 5.1 | 11 |
| 2 | Sty/Bd (24/76) | 70.5 | 9.5 | -55 |
| 3 | AN/Bd (44/56) | 41.0 | 10.8 | -21 |
| 4 | Chloroprene | 59.0 | 12.5 | -42 |
| 5 | Chloroprene | 45.0 | 12.0 | -40 |
| 6 | Sty/Bd (24/76) | 68.0 | 10.0 | -56 |
| 7 | Sty/Acrylic | 49.5 | 7.4 | -12 |
| 8 | Sty/Bd (24/76) | 69.0 | 10.0 | -56 |
| 9 | Acrylic | 58.0 | 4.3 | - |

(EVA=ethylene/vinyl acetate copolymer; Sty=styrene; Bd=butadiene; AN=acrylonitrile)

## Table 3.2  Preparation of Tiecoats

| Tiecoat | Amount Latex (g) | Amount Asphalt Emulsion (g) | Tiecoat Composition Latex (%solids) | Asphalt Emulsion (%solids) |
|---|---|---|---|---|
| Comparative A | 0 | 200.0 | 0 | 100 |
| Comparative B | 0 | 200.0 | 0 | 100 |
| Control | 0 | 0 | 0 | 0 |
| 1A | 38.5 | 200.0 | 15 | 85 |
| 2A | 30.0 | 200.0 | 15 | 85 |
| 3A | 51.6 | 200.0 | 15 | 85 |
| 3B | 51.6 | 200.0 | 15 | 85 |
| 3C | 292.7 | 200.0 | 50 | 50 |
| 3D | 1658.5 | 200.0 | 85 | 15 |
| 3E | 200.0 | 0 | 100 | 0 |
| 4A | 35.9 | 200.0 | 15 | 85 |
| 4B | 35.9 | 200.0 | 15 | 85 |
| 4C | 203.4 | 200.0 | 50 | 50 |
| 4D | 1152.5 | 200.0 | 85 | 15 |
| 4E | 200.0 | 0 | 100 | 0 |
| 5A | 47.1 | 200.0 | 15 | 85 |
| 5B | 266.7 | 200.0 | 50 | 50 |
| 5C | 1511.1 | 200.0 | 85 | 15 |
| 5D | 200.0 | 0 | 100 | 0 |
| 6A | 31.1 | 200.0 | 15 | 85 |
| 6B | 31.1 | 200.0 | 15 | 85 |
| 6C | 176.5 | 200.0 | 50 | 50 |
| 6D | 1000.0 | 200.0 | 85 | 15 |
| 6E | 200.0 | 0 | 100 | 0 |
| 7A | 42.8 | 200.0 | 15 | 85 |
| 7B | 42.8 | 200.0 | 15 | 85 |
| 7C | 242.4 | 200.0 | 50 | 50 |
| 7D | 1373.7 | 200.0 | 85 | 15 |
| 7E | 200.0 | 0 | 100 | 0 |
| 8A | 30.7 | 200.0 | 15 | 85 |

cont'd

## Table 3.2 Preparation of Tiecoats

| Tiecoat | Amount Latex | Amount Asphalt Emulsion | Tiecoat Composition | |
|---------|--------------|-------------------------|----------|--------------------|
| | | | Latex | Asphalt Emulsion |
| | | | (%solids) | |
| 8B | 30.7 | 200.0 | 15 | 85 |
| 8C | 173.9 | 200.0 | 50 | 50 |
| 8D | 985.5 | 200.0 | 85 | 15 |
| 8E | 200.0 | 0 | 100 | 0 |
| 9A | 36.5 | 200.0 | 15 | 85 |

(Control contains no tiecoat)

Example 4. Effect of Latex-Modified Asphalt Emulsion on Resistance to Tack of Tiecoat

A tiecoat was applied to plaques of BRAI® (U.S. Intec Corporation) atactic polypropylene-modified bitumen with a #40 drawdown bar to a wet film thickness of about 6 mils. The BRAI® plaques were dried for 3 hours in direct sunlight between 11 am and 2 pm. Tack resistance was evaluated by finger touch (Table 4.1).

9

## Table 4.1  Resistance to Tack Results

| Tiecoat | Resistance to Tack |
|---------|--------------------|
| Comparative A | excellent |
| Comparative B | excellent |
| 1A | excellent |
| 2A | excellent |
| 3A | excellent |
| 3B | very good + |
| 3C | excellent |
| 3D | very good |
| 3E | very good - |
| 4A | excellent |
| 4B | excellent |
| 4C | excellent |
| 4D | excellent |
| 4E | good |
| 5A | excellent |
| 5B | excellent |
| 5C | excellent |
| 5D | fair |
| 6A | excellent |
| 6B | excellent |
| 6C | excellent |
| 6D | excellent |
| 6E | very good |
| 7A | very good |
| 7B | excellent |
| 7C | very good |
| 7D | fair |
| 7E | poor |
| 8A | excellent |
| 8B | excellent |
| 8C | excellent |
| 8D | very good |
| 8E | good |
| 9A | excellent |

Good to excellent resistance to tack was maintained with the latex-modified asphalt emulsion tiecoat with up to 85% latex solids. This asphalt emulsion tiecoat permits the prompt coating of the tiecoat with a subsequent topcoat.

Example 5. Effect of Latex-Modified Asphalt Emulsion on Resistance to Bleed-Through Discolouration of Mastic Coating System

A tiecoat was applied to plaques of BRAI® (U.S. Intec Corporation) atactic polypropylene-modified bitumen, with a #40 drawdown bar to a wet film thickness of about 6 mils. The BRAI® plaques were dried for 3 hours in direct sunlight between 11 am and 2 pm. A mastic topcoat was applied with a drawdown knife at a wet film thickness of about 20 mils. After 24 hours ambient drying, the samples were cut into several pieces. The samples were evaluated for bleed-through resistance after 4 weeks at ambient temperature by measuring the colour of the top surface of the mastic coating with a Minolta CR-231 colourimeter, direct reading. Each sample was measured in duplicate, selecting different parts of the sample for each reading. In Table 5.1, the average of the two b* readings is given. The b* value is a measurement of the yellowness of the sample. On this scale, 0=absolute whiteness, 7.0-7.5=threshhold of faint discolouration for most observers and 30=light brown.

From the results disclosed in Table 5.1, it can be seen that the tiecoats containing a latex-modified asphalt emulsion reduce the yellowing that is apparent on the surface of the mastic topcoats that have been exposed to ambient temperatures when compared with the tiecoats with no latex modification.

11

## Table 5.1  Resistance to Bleed-Through Discolouration Results

| Tiecoat | b*value | |
|---|---|---|
| | Mastic Topcoat 1 | Mastic Topcoat 2 |
| Comparative A | 10.0 | 7.0 |
| Comparative B | 9.1 | 6.3 |
| Control | 6.4 | 2.8 |
| 1A | 6.5 | 5.5 |
| 2A | 4.8 | 2.8 |
| 3A | 4.5 | 3.2 |
| 3B | 5.0 | 3.7 |
| 3C | 3.8 | 2.7 |
| 3D | 3.6 | 3.0 |
| 3E | 4.2 | 2.5 |
| 4A | 5.0 | 3.6 |
| 4B | 4.9 | 3.6 |
| 4C | 4.2 | 3.5 |
| 4D | 3.6 | 3.7 |
| 4E | 1.8 | 3.2 |
| 5A | 4.5 | 3.5 |
| 5B | 3.2 | 3.4 |
| 5C | 3.6 | 3.9 |
| 5D | 4.1 | 3.2 |
| 6A | 5.2 | 3.7 |
| 6B | 3.8 | 2.6 |
| 6C | 4.4 | 2.4 |
| 6D | 4.6 | 2.8 |
| 6E | 5.5 | 1.7 |
| 7A | 6.9 | 4.1 |
| 7B | 9.6 | 5.4 |
| 7C | 6.3 | 3.1 |
| 7D | 5.2 | 2.1 |
| 7E | 3.2 | 1.8 |
| 8A | 4.9 | 3.1 |
| 8B | 3.7 | 2.3 |
| 8C | 3.6 | 2.3 |
| 8D | 4.0 | 2.3 |
| 8E | 5.3 | 2.8 |
| 9A | 7.0 | 4.8 |

Example 6. Effect of Latex-Modified Asphalt Emulsion on Resistance to Bleed-Through Discolouration of Mastic Coating System

The samples were prepared according to the procedure in Example 5. The samples, however, were evaluated for resistance to bleed-through discolouration after 2 weeks at 50°C by the same method employed in Example 7 (Table 6.1). Only mastic coating systems with mastic topcoat 2 were utilized.

EP 0 466 357 A1

## Table 6.1. Resistance to Bleed-Through Discolouration Results

| Tiecoat | b* value |
|---------|----------|
| Comparative A | 10.3 |
| Comparative B | 11.0 |
| Control | 7.5 |
| 1A | 7.0 |
| 2A | 8.1 |
| 3A | 6.0 |
| 3B | 7.4 |
| 3C | 6.2 |
| 4A | 6.2 |
| 4B | 7.0 |
| 5A | 5.6 |
| 7A | 8.3 |
| 7B | 7.4 |
| 8A | 6.0 |
| 8B | 8.4 |
| 9A | 7.0 |

The tiecoats containing a latex-modified asphalt emulsion reduced the yellowing apparent on the surface of the mastic coating exposed to an elevated temperature of 50°C.

**Claims**

1. An aqueous tiecoat composition comprising an asphalt emulsion admixed with at least one latex polymer having a glass transition temperature of less than about 10°C, wherein the composition contains from about 5% to 85% latex solids based on the % total solids of the admixture and from about 15% to 95% asphalt emulsion solids based on the % total solids of the admixture.

2. A mastic coating system comprising an aqueous tiecoat composition as defined in claim 1 intermediate of a substrate surface and a mastic topcoat.

3. A method of forming an aqueous tiecoat composition comprising admixing an asphalt emulsion with at least one latex polymer having a glass transition temperature of less than about 10°C and in amounts such that the composition contains from about 5% to 85% latex solids based on the % total solids of the admixture and from about 15% to 95% asphalt emulsion solids based on the % total solids of the admixture.

4. A method of forming a mastic coating system comprising applying a tiecoat composition to a substrate surface or a layer on a substrate surface and applying a mastic topcoat onto the tiecoat composition; characterised in that the tiecoat composition is a composition as defined in claim 1.

5. The invention according to any one of claims 1 to 4 wherein the tiecoat composition contains from about

13

15% latex solids and 85% asphalt emulsion solids to about 85% latex solids and 15% asphalt emulsion solids, based on total % solids.

6. The invention according to any one of claims 1 to 5 wherein the tiecoat composition contains from about 15% latex solids and 85% asphalt emulsion solids to about 50% latex solids and 50% asphalt emulsion solids, based on total % solids.

7. The invention according to claim 2 or claim 4 or any claim dependent thereon the substrate surface is a substrate made from asphalt, bitumin, cement, asbestos, urethane foam or concrete.

EP 0 466 357 A1

**European Patent Office**

# EUROPEAN SEARCH REPORT

Application Number

| DOCUMENTS CONSIDERED TO BE RELEVANT | | | EP 91305776.6 | |
|---|---|---|---|---|
| Category | Citation of document with indication, where appropriate, of relevant passages | Relevant to claim | CLASSIFICATION OF THE APPLICATION (Int. Cl.5) | |
| X | DATABASE WPIL, NO. 83-755 930 DERWENT PUBLICATIONS LTD., London, GB * Abstract * & JP-A-58 127 760 (YUKA) 29-07-1983 -- | 1 | C 09 D 195/00 B 32 B 11/04 B 05 D 1/36 | |
| A | DATABASE WPI, NO. 78-34 379 DERWENT PUBLICATIONS LTD., London, GB * Abstract * & JP-A-53 034 832 31-03-1978 -- | 1 | | |
| A | DATABASE WPIL, NO. 84-104 823 DERWENT PUBLICATIONS LTD., London, GB * Abstract * & JP-A-59 048 156 19-03-1984 ---- | 1 | | |
| | | | TECHNICAL FIELDS SEARCHED (Int. Cl.5) | |
| | | | C 09 D 195/00 B 32 B 11/00 B 05 D | |

The present search report has been drawn up for all claims

| Place of search | Date of completion of the search | Examiner |
|---|---|---|
| VIENNA | 08-10-1991 | PAMMINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)